# EUROPÄISCHE PATENTSCHRIFT

(11) **EP 4 051 561 B1**
(45) Veröffentlichungstag und Bekanntmachung des Hinweises auf die Patenterteilung: **14.06.2023**
(21) Anmeldenummer: 20811603.8
(22) Anmeldetag: 23.11.2020
(51) Int. Cl.: B62D 53/08

(54) **KÖNIGSZAPFENANORDNUNG UND KNICKWINKELMESSSYSTEM**
KINGPIN ASSEMBLY AND BEND ANGLE MEASUREMENT SYSTEM
ENSEMBLE DE PIVOTS D'ATTELAGE ET SYSTÈME DE MESURE D'ANGLE DE COURBURE

(30) Priorität: 11.12.2019 DE 102019134012
(43) Veröffentlichungstag der Anmeldung: 07.09.2022
(73) Patentinhaber: SAF-HOLLAND GmbH, 63856 Bessenbach (DE)
(72) Erfinder: KÜBLER, Randy, 78244 Gottmadingen (DE); KÖSTER, Mario Sebastian, 78351 Bodman-Ludwigshafen (DE); ROTHENBÜCHER, Daniel, 63741 Aschaffenburg (DE)
(74) Vertreter: Müller Schupfner & Partner Patent- und Rechtsanwaltspartnerschaft mbB
(86) Internationale Anmeldenummer: PCT/EP2020/083034
(87) Internationale Veröffentlichungsnummer: WO 2021/115768

(56) Entgegenhaltungen:
- EP-A1- 2 815 950
- US-A1- 2007 216 134
- US-A1- 2013 082 453

## Beschreibung

Die Erfindung betrifft ein Knickwinkelmesssystem.

Königszapfenanordnungen sind bereits aus dem Stand der Technik bekannt. Diese dienen dazu, an einem Anhänger angeordnet zu werden. Der Königszapfen der Königszapfenanordnung ist dabei dazu ausgelegt, in eine Sattelkupplung einzufahren und dort eingekuppelt zu werden, um so Kräfte während des Betriebs zwischen dem Anhänger und dem Zugfahrzeug übertragen zu können. Durch diese Königszapfenverkuppelung wird ermöglicht, dass der Anhänger drehbar um den Königszapfen relativ zum Zugfahrzeug ist, wobei gleichzeitig sicher hohe Kräfte über den Königszapfen zwischen dem Zugfahrzeug und dem Anhänger übertragen werden können. Die Kenntnis des zwischen dem Zugfahrzeug und dem Anhänger vorhandenen Winkels um die Hochachse, welcher auch als Knickwinkel bezeichnet wird, ist von besonders großem Interesse. Beispielsweise kann in gewissen Situationen ein kritischer Fahrzustand frühzeitig erkannt werden, wenn der Knickwinkel bekannt ist. Die im Stand der Technik bekannten Systeme basieren meist auf der Nutzung von Magneten, wobei diese Messsysteme jedoch aufgrund der metallischen Bauteile im Bereich des Königszapfens teilweise starke Messfehler aufweisen. Darüber hinaus weisen die aus dem Stand der Technik bekannten Messsysteme auch einen hohen Bauraumbedarf auf.

Die US 2013/0082453 A1 betrifft einen Apparat zum Messen eines Knickwinkels zwischen einem Traktor und einem Hänger, welche über einen Königzapfen und eine Sattelkupplung miteinander verbunden sind. Die Messung des Knickwinkels erfolgt dabei über einen Lasersensor.

Es ist daher Aufgabe der vorliegenden Erfindung ein kompaktes und zuverlässiges Messen eines Knickwinkels zu ermöglichen.

Gelöst wird diese Aufgabe mit einem Knickwinkelmesssystem gemäß Anspruch 1. Weitere Vorteile, Merkmale und/oder vorteilhafte Ausführungsformen ergeben sich aus den Unteransprüchen, der Beschreibung sowie aus den Figuren.

Erfindungsgemäß umfasst eine Königszapfenanordnung einen Königszapfen und ein Montageelement, wobei das Montageelement insbesondere ein Aufnahmeteller ist, wobei der Königszapfen eine Fußsektion und einen Königszapfenkopf aufweist, wobei der Königszapfen sich in eine Königszapfenrichtung erstreckt, wobei die positive Königszapfenrichtung von der Fußsektion zum Königszapfenkopf weist, wobei der Königszapfen über die Fußsektion form-, kraft- und/oder stoffschlüssig mittelbar und/oder unmittelbar am Montageelement befestigt ist, wobei der Königszapfen derart befestigt ist, dass der Königszapfen in eine Umfangsrichtung um die Königszapfenrichtung rotationsfest zu dem Montageelement ist, wobei das Montageelement und/oder der Königszapfen eine erste Messfläche aufweist(en), welche entlang ihrer Erstreckung einen kontinuierlichen Höhenverlauf in Richtung der Königszapfenrichtung aufweist. Die Königszapfenanordnung dient dazu, an einem Nutzfahrzeuganhänger befestigt zu sein bzw. zu werden. Insbesondere ist die Königszapfenanordnung dabei ein Teil eines Knickwinkelmesssystems, welches dazu dient, den Knickwinkel zwischen dem Nutzfahrzeuganhänger und einem Zugfahrzeug zu bestimmen. Ein Nutzfahrzeuganhänger im Sinne der Erfindung ist insbesondere ein Anhänger, welcher eine zulässige Gesamtmasse von mindestens 7,51 t, bevorzugt von mindestens 10,1 t und besonders bevorzugt von mindestens 15,1 t und besonders stark bevorzugt von mindestens 20,1 t aufweist. Die Königszapfenanordnung verfügt über einen Königszapfen. Dieser Königszapfen dient dazu, in eine Sattelkupplungsanordnung einkuppelbar zu sein, um in dem eingekuppelten Zustand Zug- und/oder weitere Kräfte zwischen dem Anhänger und einem Zugfahrzeug zu übertragen. Der Königszapfen verfügt über eine Fußsektion und einen Königszapfenkopf. Der Königszapfenkopf ist insbesondere derjenige Teil des Königszapfens, welcher einen ersten distalen Endabschnitt des Königszapfens in Richtung der Königszapfenrichtung ausbildet, wobei dieser Endabschnitt als frei auslaufender Endabschnitt ausgebildet ist. Die Fußsektion des Königszapfens hingegen bildet insbesondere den Endabschnitt in Königszapfenrichtung aus, welcher dem Königszapfenkopf gegenüberliegend ausgebildet ist. Die Fußsektion ist form-, kraft- und/oder stoffschlüssig mittel- und/oder unmittelbar am Montageelement befestigt. Diese Befestigung erfolgt dabei derart, dass der Königszapfen in Umfangsrichtung um die Königszapfenrichtung rotationsfest zu dem Montageelement ist. In anderen Worten kann dies bedeuten, dass eine relative Rotation zwischen dem Königszapfen und dem Montageelement durch die Befestigung verhindert ist. Diese relative Rotation bzw. die Befestigung des Königszapfens mittels seiner Fußsektion am Montageelement erfolgt dabei vorteilhafterweise kraft- und formschlüssig, um eine relative Rotation zu verhindern. Insbesondere auch deshalb, da eine reine kraftschlüssige Verbindung dazu neigt, zumindest gewisse Mikrobewegungen zuzulassen. Der Königszapfen selbst ist vorteilhafterweise derart ausgebildet, dass dieser zumindest teilweise rotationssymmetrisch um die Königszapfenrichtung ausgebildet ist. Vorteilhafterweise ist der Königszapfen - zumindest teilweise - im Wesentlichen rotationssymmetrisch um die Königszapfenrichtung ausgebildet, wobei unter "im Wesentlichen rotationssymmetrisch" in diesem Zusammenhang zu verstehen ist, dass beispielsweise Montageöffnungen und/oder Schweißnähte oder Fertigungsungenauigkeiten vorhanden sein können, welche jedoch die Rotationssymmetrie im Sinne von "im Wesentlichen rotationssymmetrisch" nicht zerstören können. Das Montageelement der Königszapfenanordnung dient dazu, den Königszapfen relativ zu dem Anhänger festzulegen. Insbesondere kann es sich bei dem Montageelement vorteilhafterweise um einen Aufnahmeteller handeln. Ein Aufnahmeteller zeichnet sich insbesondere dadurch aus, dass dieser eine äußere rotationssymmetrische Gestalt aufweist. Das Montageelement und/oder der Königszapfen weist bzw. weisen dabei eine erste Messfläche auf. In anderen Worten kann die erste Messfläche daher einen Teil des Montageelements und/oder einen Teil des Königszapfens ausbilden.

Diese erste Messfläche weist entlang ihrer Erstreckungsrichtung einen kontinuierlichen Höhenverlauf in Richtung der Königszapfenrichtung auf. Ein kontinuierlicher Höhenverlauf in Richtung der Königszapfenrichtung kann dabei in diesem Zusammenhang bedeuten, dass entlang der Erstreckung der Messfläche diese in Richtung der Königszapfenrichtung an- oder absteigend ausgebildet ist - je nach Laufrichtung entlang der Erstreckungsrichtung. In anderen Worten kann dies bedeuten, dass die Messfläche derart ausgestaltet ist, dass zwischen einem ersten Endpunkt der Messfläche zu einem distal gegenüberliegenden Endpunkt der Messfläche in Erstreckungsrichtung alle anderen Punkte der Messfläche kontinuierlich in Königszapfenrichtung zwischen diesen Endpunkten liegen. Beispielsweise kann die Messfläche daher eine Art schiefe Ebene sein. Alternativ bevorzugt kann die Messfläche auch spiralähnlich um den Königszapfen herum ausgebildet sein. Vorteilhafterweise weist die Messfläche zumindest eine Oberfläche auf, welche mindestens 4 cm², bevorzugt mindestens 8 cm² und besonders stark bevorzugt 16 cm² auf, wobei alle Anteile dieser Fläche einen kontinuierlichen Höhenverlauf in Richtung der Königszapfenrichtung aufweisen. Die Messfläche ist dabei insbesondere dazu bestimmt, mit einem Messsensor zu interagieren. Durch den kontinuierlichen Höhenverlauf in Richtung der Erstreckung der Messfläche kann über einen Sensor in effektiver Weise eine Verdrehung der Königszapfenanordnung um die Königszapfenrichtung in Umfangsrichtung festgestellt werden. Die erfindungsgemäße Königszapfenanordnung ist daher in der Lage, durch deren kompakte Ausgestaltung eine bauraumsparende Messmethodik bereitzustellen, welche eine zuverlässige Messung des Knickwinkels zwischen dem Anhänger und dem Zugfahrzeug ermöglicht.

Bevorzugt erstreckt sich die erste Messfläche in einem Winkelbereich um die Königszapfenrichtung in Umfangsrichtung, wobei der Winkelbereich, bevorzugt zumindest 90°, besonders bevorzugt zumindest 150° und, insbesondere besonders bevorzugt zumindest 180°, beträgt. Der maßgebliche Winkel für die Bestimmung des Winkelbereichs um die Königszapfenrichtung ist dabei der gerade umschließende Winkel der ersten Messfläche in Richtung der Umfangsrichtung ausgehend von der Königszapfenrichtung. Bei einem Winkelbereich von mindestens 90° resultiert eine besonders kompakte Messfläche. Bei einem Winkelbereich von mindestens 150° ergibt sich eine besonders zuverlässige Messung des Kickwinkels, denn häufig liegt der zwischen dem Zugfahrzeug und dem Anhänger liegende Knickwinkel in einem Bereich größer als 75°. Bei einem Winkelbereich um die Königszapfenrichtung in Umfangsrichtung von zumindest 180° ist die Königszapfenanordnung in der Lage, auch kritische Messwinkel zu liefern, insbesondere wenn zwischen Zugfahrzeug und Anhänger eine kritische Situation auftritt. Alternativ bevorzugt kann die Messfläche sich auch vollständig um die Königszapfenrichtung in Umfangsrichtung erstrecken. In einer derartigen Ausgestaltung kann die Messfläche einen geschlossenen Ring um die Königszapfenrichtung ausbilden, dessen Mittelpunkt insbesondere auf der Königszapfenrichtung liegt. Durch das vollständige Umschließen des Königszapfens durch die Messfläche resultiert eine besonders einfach herzustellende Königszapfenanordnung. Insbesondere liegt dabei die Höhendifferenz der Messfläche in mm pro Erstreckungswinkel in ° um die Königszapfenrichtung in Umfangsrichtung in einem Bereich von 0,1 mm/° bis 0,3 mm/° und besonders bevorzugt in einem Bereich von 0,15 mm/° bis 0,25 mm/°. Das Verhältnis der Höhendifferenz der Messfläche zu dem Erstreckungswinkel ist daher eine Art Steigungsangabe der Messfläche. Bei einem Verhältnis von 0,1 mm/° bis 0,3 mm/° resultiert eine besonders einfach herzustellende Messfläche. Bei einem Verhältnis im Bereich von 0,15 mm/° bis 0,25 mm/° resultiert einen besonders guter Kompromiss zwischen Messauflösung und Bauraum bedarf.

In einer vorteilhaften Ausführungsform liegt das Verhältnis der maximalen Höhendifferenz der ersten Messfläche zum maximalen Winkelbereich in einem Bereich von 0,025 mm/° bis 0,5 mm/°, besonders bevorzugt in einem Bereich von 0,1 mm/° des 0,3 mm/° und besonders stark bevorzugt in einem Bereich von 0,15 mm/° bis 0,25 mm/°. Die maximale Höhendifferenz der Messfläche ist dabei insbesondere diejenige Differenz zwischen dem höchsten Punkt der Messfläche und dem niedrigsten Punkt der Messfläche in Königszapfenrichtung. In anderen Worten kann dies bedeuten, dass die Höhendifferenz die maximale Höhendifferenz der Messfläche in Königszapfenrichtung ist. Bei einem Verhältnis im Bereich von 0,025 bis 0,5 mm/° kann eine besonders kompakte Königszapfenanordnung erreicht werden. Bei einem Verhältnis im Bereich von 0,1 bis 0,3 mm/° resultiert eine besonders einfach herzustellende Königszapfenanordnung. Überraschenderweise hat die Anmelderin herausgefunden, dass bei einem Verhältnis im Bereich von 0,15 bis 0,25 mm/° ein besonders guter Kompromiss zwischen der Messauflösung und dem Bauraumbedarf der Königszapfenanordnung resultiert.

Bevorzugt erstreckt sich die erste Messfläche in Umfangsrichtung. Unter "Erstrecken in Umfangsrichtung" ist dabei zu verstehen, dass die erste Messfläche bogenförmig, insbesondere kreissegmentförmig um die Königszapfenrichtung in Umfangsrichtung ausgebildet ist. Bevorzugt ist dies dann der Fall, wenn die Messfläche entlang ihres Verlaufs einen gleich bleibenden Abstand zur Königszapfenrichtung aufweist. Durch dieses Ausbilden der Messfläche in Umfangsrichtung kann erreicht werden, dass der Abstand der Messfläche zur Königszapfenrichtung gleichbleibend ist, sodass bei einer Drehung der Königszapfenanordnung um die Königszapfenrichtung in Umfangsrichtung ein Messsensor, der mit der Messfläche messtechnisch interagiert, nicht verschoben muss bzw. verlagert werden muss, um weiterhin messtechnisch mit der Messfläche zu interagieren, um zuverlässig Messwerte zu liefern.

Vorteilhafterweise weist die erste Messfläche eine Breite von mindestens 2 mm auf bevorzugt von mindestens 4 mm auf. Die Breite der Messfläche ist dabei die Erstreckung der Messfläche senkrecht zur Erstreckungsrichtung. In anderen Worten ist die Breite die kürzere Erstreckung der Messfläche. Durch das Vorsehen von einer Messfläche, welche mindestens 4 mm Breite aufweist, kann die Messsicherheit des Knickwinkelmesssystems, in welchem die Königszapfenanordnung eingebaut werden soll, erhöht werden.

Bevorzugt bildet die erste Messfläche eine Stirnfläche eines Messvorsprungs aus. Die Stirnfläche ist insbesondere die den Messvorsprung - in Königszapfenrichtung gesehen - berandende Fläche des Messvorsprungs. Durch diese Art der Ausgestaltung kann die Zugänglichkeit der Messfläche erhöht werden, sodass die Messgenauigkeit hierdurch gesteigert werden kann. Der Messvorsprung kann sich dabei beispielsweise von einer Grundfläche aus erstrecken. Diese Grundfläche weist in vorteilhafter Weise eine Normale auf, die parallel zur Königszapfenrichtung ist. Beispielsweise kann diese Grundfläche dabei einen Teil des Montageelements ausbilden oder einen Teil des Königszapfens, insbesondere kann die Grundfläche dabei Teil des Königszapfenkopfs sein. Vorteilhafterweise ist der Messvorsprung dabei derart ausgebildet, dass die Grundfläche den Messvorsprung vollständig umschließt. Hierdurch kann z.B. schnell eine Fehlmessung festgestellt werden, wenn ein Messsensor "versehentlich" nicht mit der Messfläche - sondern mit der Grundfläche - messtechnisch interagiert.

In einer vorteilhaften Ausführungsform ist der Messvorsprung einstückig mit dem Königszapfen ausgebildet oder der Messvorsprung ist einstückig mit dem Montageelement ausgebildet. Durch diese Einstückigkeit des Messvorsprungs mit dem Königszapfen oder mit dem Montageelement kann eine relative Verdrehung zwischen dem Messvorsprung und dem Königszapfen bzw. zwischen dem Messvorsprung und dem Montageelement effektiv bauraumsparend und kostengünstig verhindert werden. Eine derartige relative Rotation ist insbesondere deshalb zu verhindern, da dies zu einer Verfälschung der Knickwinkelmessung führen würde.

In einer vorteilhaften weiteren Ausführungsform erstreckt sich der Messvorsprung von einer Grundfläche aus, wobei die Grundfläche eine Normale aufweist, die zumindest im Wesentlichen parallel zur Königszapfenrichtung ist. Hierdurch resultiert eine besonders einfach herzustellende und daher kostengünstige Königszapfenanordnung. Im Wesentlichen parallel sind zwei Richtungen insbesondere dann, wenn diese Richtungen maximal einen Winkel von 4°, bevorzugt von 2° und besonders stark bevorzugt von maximal 1° zueinander ausbilden.

Vorteilhafterweise liegt das Verhältnis der maximalen Höhendifferenz der ersten Messfläche zum minimalen Durchmesser des Königszapfens in einem Bereich von 0,03 bis 0,3, besonders bevorzugt in einem Bereich von 0,06 bis 0,25 und besonders stark bevorzugt in einem Bereich von 0,09 bis 0,22. Der minimale Durchmesser des Königszapfens ist daher der kleinste Außendurchmesser des Königszapfens zwischen der Fußsektion und dem Königszapfenkopf. Bei einem Verhältnis zwischen der maximalen Höhendifferenz der ersten Messfläche zum minimalen Durchmesser der Königszapfens im Bereich von 0,03 bis 0,3resultiert eine besonders zuverlässige Messbarkeit des Knickwinkels. Sollte das Verhältnis der maximalen Höhendifferenz der ersten Messfläche zum minimalen Durchmesser des Königszapfens in einem Bereich von 0,06 bis 0,25 liegen, so resultierte hierdurch eine besonders einfache Herstellung der Messfläche, sodass eine besonders kostengünstige Königszapfenanordnung resultiert. Bei einem Verhältnis im Bereich von 0,09 bis 0,22 hat die Anmelderin überraschend herausgefunden, dass hierdurch ein besonders guter Kompromiss zwischen einer kompakten Anordnung und einer hohen Messgenauigkeit des Knickwinkels erreicht werden kann.

Vorteilhafterweise weist das Montageelement und/oder der Königszapfen eine zweite Messfläche auf, welche vorteilhafterweise entlang ihrer Erstreckung einen kontinuierlichen Höhenverlauf in Richtung der Königszapfenrichtung aufweist und/oder wobei die zweite Messfläche dieselben Merkmale aufweisen kann, wie die erste Messfläche. In anderen Worten kann die zweite Messfläche ähnlich oder sogar gleich ausgestaltet sein wie die erste Messfläche. Die erste Messfläche und die zweite Messfläche sind jedoch insbesondere klar voneinander unterscheidbar angeordnet bzw. ausgebildet, sodass insbesondere die zweite Messfläche keine kontinuierliche Weiterbildung der ersten Messfläche sein kann. In anderen Worten kann dies bedeuten, dass beispielsweise ein Spalt, eine Ausnehmung und/oder ein Knick vorhanden ist, welche(r) die erste zu der zweiten Messfläche klar voneinander abtrennt. Dabei kann es vorteilhaft sein, dass sowohl das Montageelement als auch der Königszapfen jeweils eine zweite Messfläche aufweisen. Die zweite Messfläche kann beispielsweise derart ausgestaltet sein, dass diese eine Normale aufweist, welche zumindest im Wesentlichen parallel zur Königszapfenrichtung ist. Hierdurch kann die zweite Messfläche beispielsweise dazu genutzt werden, als eine Art Richtungsindikator zu dienen. Alternativ kann die zweite Messfläche jedoch auch einen kontinuierlichen Höhenverlauf in Richtung der Königszapfenrichtung aufweisen. Hierdurch kann unter anderem die zweite Messfläche eine Art Referenzfläche bzw. Kontrollfläche ausbilden, welche dazu dient, einen Referenzwert im Vergleich zu dem Wert der Messung unter Einbeziehung der ersten Messfläche zu liefern. Daher kann die zweite Messfläche eine Art Kontrollmessbarkeit schaffen. Es sei in diesem Zusammenhang auch noch darauf hingewiesen, dass sowohl das Montageelement als auch der Königszapfen mehr als eine erste und eine zweite Messfläche aufweisen können. In anderen Worten bedeutet dies, dass sowohl das Montageelement als auch der Königszapfen weitere Messflächen aufweisen können, wobei diese Messflächen insbesondere dieselben bereits beschriebenen und noch folgenden Messflächenmerkmale der ersten und/oder der zweiten Messfläche aufweisen können.

In einer vorteilhaften Ausführungsform bildet die erste Messfläche und die zweite Messfläche jeweils eine Stirnfläche des Messvorsprungs aus. In anderen Worten kann dies bedeuten, dass der Messvorsprung jeweils zwei verschiedene Messflächen aufweist. Vorteilhafterweise ist der Messvorsprung dabei derart ausgebildet, dass jegliche Stirnfläche des Messvorsprungs in Königszapfenrichtung durch die erste Messfläche und/oder durch die zweite Messfläche gebildet ist.

In einer vorteilhaften Weiterbildung sind die erste Messfläche und die zweite Messfläche direkt benachbart zueinander. Direkt benachbart sind zwei Messflächen insbesondere dann, wenn diese einen gemeinsamen Rand zueinander aufweisen und/oder maximal 3 mm voneinander beabstandet sind. Beispielsweise kann zwischen der direkt benachbarten ersten und zweiten Messfläche ein Sprung oder Absatz - in Königszapfenrichtung gesehen - vorgesehen sein. Durch das Vorsehen eines solchen Sprungs zwischen der ersten oder zweiten Messfläche kann unter anderem ein absoluter Winkel, beispielsweise ein Nullwinkel, in einfacher Weise bestimmt bzw. erfasst werden. Diese "Absolutwinkelmessung" kann durch den Vorsprung oder Absatz insbesondere auch dann sicher erfolgen, wenn die Messung durch Verunreinigungen auf der Messfläche gestört ist.

In einer bevorzugten Ausführungsform bildet die zweite Messfläche eine Stirnfläche eines zweiten Messvorsprungs aus. In anderen Worten kann dies bedeuten, dass die zweite Messfläche nicht Teil des ersten Messvorsprungs ist, sondern eine Stirnfläche eines zweiten Messvorsprungs ausbildet. Bevorzugt ist die zweite Messfläche dabei derart ausgebildet, dass diese die gesamte Stirnfläche des zweiten Messvorsprungs ausbildet. In anderen Worten kann dies bedeuten, dass die zweite Messfläche vollständig den zweiten Messvorsprung in Königszapfenrichtung berandet. Durch das Ausbilden eines zweiten Messvorsprungs, welcher die zweite Messfläche aufweist, kann ein besonders redundantes Messsystem erreicht werden. Alternativ bevorzugt können diese zwei verschiedenen Messvorsprünge auch dazu genutzt werden, die relative Messgenauigkeit zu erhöhen.

In einer weiteren bevorzugten Ausführungsform ist die erste Messfläche entgegengesetzt ansteigend im Vergleich zur zweiten Messfläche. Hierdurch kann in besonders einfacher Weise eine Differenzmessung erfolgen, um so die Genauigkeit der Knickwinkelmessung zu erhöhen. Unter "entgegengesetzt ansteigend" ist dabei zu verstehen, dass bei einem Anstieg der ersten Messfläche entlang deren Erstreckungsrichtung die zweite Messfläche - in diese Richtung betrachtet - absteigend ausgebildet ist. Beispielsweise ist eine "entgegengesetzte" Ausbildung dann gegeben, wenn die erste Messfläche in Umfangsrichtung ansteigend in die (positive/negative) Umfangsrichtung ausgebildet ist, wobei die zweite Messfläche - hingegen - absteigend in die (positive/negative) Umfangsrichtung ausgebildet ist.

Bevorzugt weist die erste Messfläche in einer Radialrichtung einen weiteren Abstand von der Königszapfenrichtung auf, als die zweite Messfläche. Die Radialrichtung ist dabei diejenige Richtung, welche radial von der Königszapfenrichtung weg weist. In anderen Worten können die Radialrichtung, die Umfangsrichtung und die Königszapfenrichtung ein Zylinderkoordinatensystem ausbilden, wobei die Königszapfenrichtung die Höhenrichtung angibt, die Radialrichtung die Durchmesserrichtung und die Umfangsrichtung die Umfangsrichtung des Zylinderkoordinatensystems. Durch das weiter Beabstanden der ersten Messfläche relativ zur Königszapfenrichtung im Vergleich zur zweiten Messfläche ist es möglich, dass die beiden Messflächen sich in Umfangsrichtung sehr weit erstrecken und in Radialrichtung nebeneinander angeordnet sind. Hierdurch kann die Erstreckungsrichtung der ersten Messfläche und der zweiten Messfläche in Umfangsrichtung gesteigert werden, sodass der messbare Winkelbereich erhöht werden kann. Unter einem "weiteren Abstand in Radialrichtung" ist dabei insbesondere zu verstehen, dass der kleinste Abstand der ersten Messfläche zur Königszapfenrichtung in Radialrichtung größer ist als der maximal mögliche Abstand der zweiten Messfläche in Radialrichtung zur Königszapfenrichtung.

Ein weiterer Aspekt der Erfindung betrifft ein Knickwinkelmesssystem umfassend eine Königszapfenanordnung wie vorgehend und nachfolgend beschrieben, einen ersten Messsensor und eine Auswerteinheit, wobei der erste Messsensor mit der ersten Messfläche messtechnisch interagiert. Das Knickwinkelmesssystem verfügt über einen Messsensor und eine Auswerteinheit, wobei der Messsensor derart mit der ersten Messfläche der Königszapfenanordnung interagiert, so dass dieser in der Lage ist, messtechnisch einen Knickwinkel um die Umfangsrichtung zu bestimmen. Beispielsweise kann dieser Messsensor an einem Zugfahrzeug befestigt sein. Unter "messtechnisch interagieren" ist insbesondere zu verstehen, dass durch die Interaktion des Messsensors mit der Messfläche das Messsignal entsteht. Beispielsweise kann der Messsensor dabei einen Fühler in Richtung der Königszapfenrichtung aufweisen, welcher über mechanische Mittel, wie eine Feder, gegen die erste Messfläche gedrückt wird und bei einer Verdrehung der Königszapfenanordnung durch den kontinuierlichen Höhenverlauf der Messfläche in Königszapfenrichtung verschoben wird. Grundlegend kann der Messsensor jedoch ein berührendes und/oder berührungsloses Messprinzip verwenden. Ein berührungsloser Sensor kann insbesondere ein optischer Sensor, wie beispielsweise ein Laser, sein, welcher durch das messtechnische Interagieren, insbesondere in Form einer Abstandsmessung zur Messfläche, den Knickwinkel misst. Die Auswerteinheit des Knickwinkelmesssystems dient dazu, unter Kenntnis des kontinuierlichen Höhenverlaufs der ersten und/oder der zweiten Messfläche der Königszapfenanordnung den Knickwinkel zwischen dem Zugfahrzeug und dem Anhänger, auf/an welchem die Königszapfenanordnung montiert ist, zu bestimmen. Die Auswerteinheit kann dabei beispielsweise in ein Steuergerät des Zugfahrzeugs oder des Anhängers integriert sein. Alternativ bevorzugt kann die Auswerteinheit auch ein separates Element sein, welches beispielsweise in unmittelbarer Umgebung des Messsensors angeordnet ist.

Bevorzugt weist das Knickwinkelmesssystem einen zweiten Sensor auf, wobei der zweite Messsensor mit der zweiten Messfläche messtechnisch interagiert. In anderen Worten kann dies bedeuten, dass der erste Messsensor mit der ersten Messfläche und der zweite Messsensor mit der zweiten Messfläche interagiert. Hierdurch kann eine besonders sichere und zuverlässige Knickwinkelbestimmung erfolgen, denn die zweite Messfläche kann dazu dienen, einen Referenzwert und/oder einen zweiten Knickwinkelwert zu bestimmen, sodass die Fehlerhaftigkeit der Messung - mittels der ersten Messfläche - reduziert werden kann. Die zweite Messfläche kann insbesondere eben ausgestaltet sein, wobei diese zweite Messfläche eine Normale aufweisen kann, welche im Wesentlichen senkrecht zu der Königszapfenrichtung ist. Insbesondere sind die erste und die zweite Messfläche grundlegend nicht verlagerbar relativ zu einander. Unter "nicht verlagerbar" ist in diesem Zusammenhang zu verstehen, dass die erste und die zweite Messfläche in einem mitbewegenden Bezugssystem immer die gleiche Position zueinander aufweisen, wobei bei dieser Positionsbestimmung eventuelle Verschleißerscheinungen nicht berücksichtigt werden sollen. Hierdurch kann insbesondere bei einem vertikalen Abheben bzw. bei einem Abheben in Königszapfenrichtung und/oder bei einem Verschleiß weiterhin sicher der Knickwinkel erfasst werden, da die Relation der Messungen zueinander - in Bezug zu der ersten Messfläche und der zweiten Messfläche - durch ein Abheben oder durch einen Verschleiß, insbesondere der Sattelkupplungsplatte und/oder von Teilen der Königszapfenanordnung, nicht oder nur marginal tangiert wird.

Vorteilhafterweise dient der zweite Sensor als ein Referenzsensor. Daher kann der zweite Sensor beispielsweise dazu genutzt werden, Fehlmessungen zu ermitteln und/oder dazu dienen eine verschleißunabhängige Messung zu ermöglichen, in dem dieser Sensor einen Referenzmesswert bestimmt.

Vorteilhafterweise sind der erste oder der zweite Sensor an einer Sattelkupplungsplatte angeordnet und/oder eingelassen.

In einer vorteilhaften Ausführungsform ist der erste Messsensor und/oder der zweite Messsensor ein berührungslose Sensor, erfindungsgemäß ein induktiver Sensor. Durch das Verwenden eines berührungslosen Sensors resultiert eine besonders verschleißarme Messung des Knickwinkels. Vorteilhafterweise ist der erste und/oder der zweite Messsensor ein induktiver, berührungsloser Sensor, insbesondere ein induktiver Näherungsschalter. Der Vorteil eines induktiven Näherungsschalters ist, dass dieser auch bei einer starken Verschmutzung der Messfläche(n) zuverlässige Messwerte liefert.

In einer vorteilhaften Weiterbildung weist der erste Messsensor einen Messabstand von der ersten Messfläche auf, wobei das Verhältnis des Messabstandes zu der maximalen Höhendifferenz der ersten Messfläche in einem Bereich von 0,2 bis 1,05, bevorzugt in einem Bereich von 0,4 bis 0,95 und besonders bevorzugt in einem Bereich von 0,5 bis 0,9 liegt. Der Messabstand ist insbesondere derjenige Abstand in Königszapfenrichtung von dem Messsensor zum höchsten Punkt der Messfläche in Königszapfenrichtung, mit welcher der Messsensor messtechnisch interagiert. In anderen Worten kann dies bedeuten, dass der Messabstand der kleinstmögliche Abstand zwischen Messsensor und Messfläche ist, wenn der Messsensor sich direkt unterhalb des höchsten Punktes der Messfläche in Königszapfenrichtung befindet. Bei einem Verhältnis des Messabstands in Königszapfenrichtung zur maximalen Höhendifferenz der ersten Messfläche im Bereich von 0,2 bis 1,05 ergibt sich eine besonders zuverlässige Knickwinkelmessung. Bei einem Bereich von 0,4 bis 0,95 resultiert eine besonders kompakte Messanordnung, sodass wertvoller Bauraum im Bereich der Königszapfenanordnung gespart werden kann. Bei einem Verhältnis im Bereich von 0,5 bis 0,9 hat die Anmelderin überraschend herausgefunden, dass trotz starker Verschmutzungen weiterhin eine besonders zuverlässige Messung des Knickwinkels erreicht werden kann, sodass bei einem Abstand von 0,5 bis 0,9 eine verschmutzungsunempfindliche Messung des Knickwinkels möglich ist.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
**Figur 1** eine perspektivische Ansicht einer Königszapfenanordnung;
**Figur 2** ein Montageelement einer Königszapfenanordnung;
**Figur 3** eine Außenansicht einer Königszapfenanordnung;
**Figur 4** eine weitere perspektivische Ansicht eines Montageelements und
**Figur 5** eine Ansicht einer Königszapfenanordnung in Königszapfenrichtung.

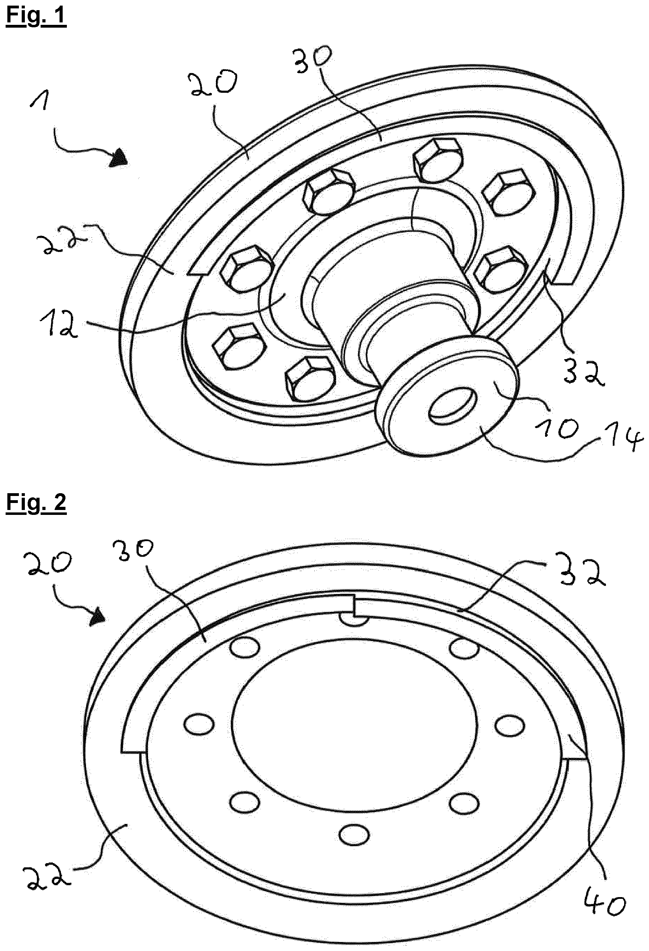

In der **Figur 1** ist eine Königszapfenanordnung 1 gezeigt, die über einen Königszapfen 10 und ein Montageelement 20 in Form eines Aufnahmetellers verfügt. Der Königszapfen 10 der Königszapfenanordnung 1 verfügt über einen Königszapfenkopf 14, welcher als ein frei auslaufendes Ende des Königszapfens 10 ausgebildet ist. Die Fußsektion 12 des Königszapfens 10 ist kraft-, form- und stoffschlüssig an dem Montageelement 20 festgelegt. Das Montageelement 20 verfügt über eine erste Messfläche 30, welche vollständig durch die Stirnfläche des Messvorsprungs 32 ausbildet ist. Die erste Messfläche 30 weist dabei einen kontinuierlichen Höhenverlauf in Richtung der Königszapfenrichtung R10 auf, wobei der Messvorsprung 32 sich von einer Grundfläche 22 des Montageelements 20 aus erstreckt.

In der **Figur 2** ist ein Montageelement 20 gezeigt, welches prinzipiell auch in der in der Figur 1 dargestellten Königsanordnung 1 Anwendung finden könnte. Das Montageelement 20 verfügt dabei über einen Messvorsprung 32, dessen Stirnflächen durch die erste Messfläche 30 und die zweite Messfläche 40 gebildet sind. Zwischen der ersten Messfläche 30 und der direkt benachbarten zweiten Messfläche 40 befindet sich ein Absatz, welcher die erste Messfläche 30 von der zweiten Messfläche 40 trennt bzw. separiert.

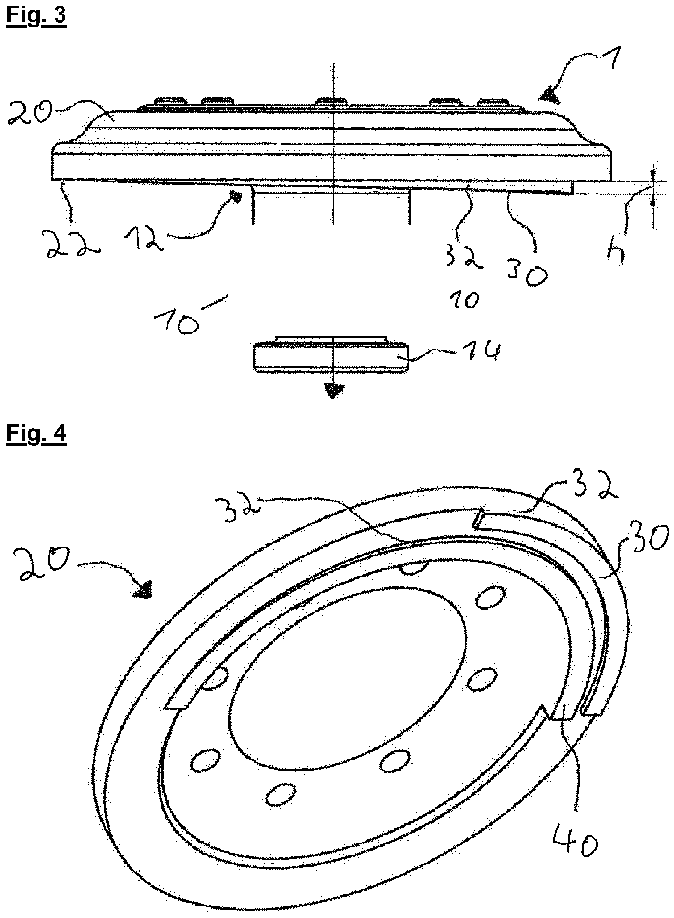

In der **Figur 3** ist eine Seitenansicht einer Königszapfenanordnung 1 gezeigt. Die Königszapfenanordnung 1 verfügt dabei ebenfalls über einen Königszapfen 10 und ein Montageelement 20. Das Montageelement 20 ist dabei in der Figur 3 als ein Aufnahmeteller ausgebildet. In der Figur 3 ist die Höhendifferenz h der ersten Messfläche 30 zu sehen. Die erste Messfläche 30 bildet dabei eine Stirnfläche des ersten Messvorsprungs 32 aus. Der Königszapfen 10 erstreckt sich dabei von dessen Fußsektion 12 in positiver Königszapfenrichtung R10. Das distale Ende in positiver Königszapfenrichtung R10 wird durch den Königszapfenkopf 14 des Königszapfens 10 gebildet.

In der **Figur 4** ist ein Montageelement 20 gezeigt, welches über zwei Messvorsprünge 32 verfügt. Der eine Messvorsprung 32 weist dabei die erste Messfläche 30 auf und der zweite Messvorsprung 32 die zweite Messfläche 40. Die Messvorsprünge 32 sind dabei derart ausgebildet, dass die Stirnflächen dieser Messvorsprünge 32 sämtlich durch die erste Messfläche 30 oder durch die zweite Messfläche 40 gebildet sind.

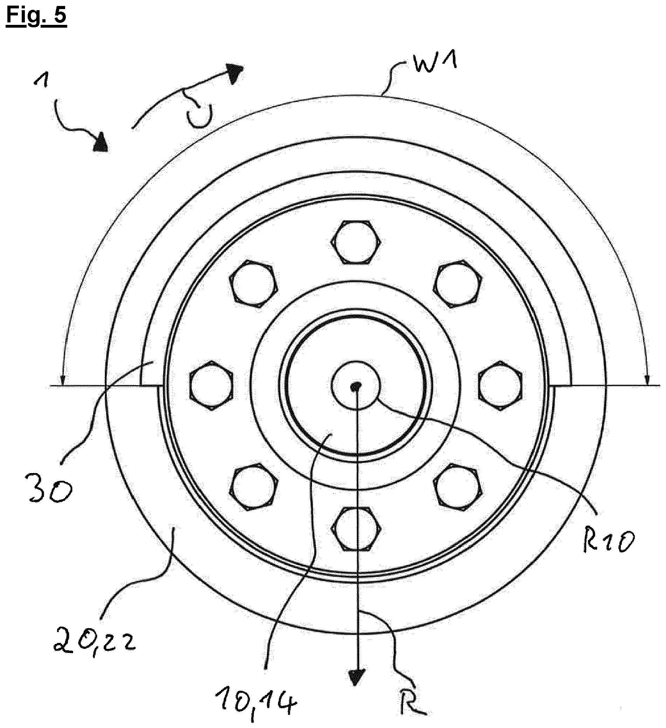

In der **Figur 5** ist eine weitere Ansicht einer Königszapfenanordnung 1 gezeigt. In der Figur 5 ist ersichtlich, dass die erste Messfläche 30 sich in einem Winkelbereich W1 um die Königszapfenrichtung R10 in Umfangsrichtung U erstreckt. In der Figur 5 erstreckt sich dabei der Winkelbereich W1 um die Königszapfenrichtung R10 in Umfangsrichtung um 180°. Die Umfangsrichtung U, die Radialrichtung R und die Königszapfenrichtung R10 bilden, wie aus der Figur 5 ersichtlich, ein Zylinderkoordinatensystem aus.

### Bezugszeichenliste

- 1: - Königszapfenanordnung
- 10: - Königszapfen
- 12: - Fußsektion des Königszapfens
- 14: - Königszapfenkopf
- 20: - Montageelement
- 22: - Grundfläche
- 30: - erste Messfläche
- 32: - Messvorsprungs
- 40: - zweite Messfläche
- h: - Höhendifferenz
- R: - Radialrichtung
- R10: - Königszapfenrichtung
- U: - Umfangsrichtung
- W1: - Winkelbereich

## Patentansprüche

1. Knickwinkelmesssystem umfassend eine Königszapfenanordnung (1), einen ersten Messsensor und eine Auswerteinheit,
wobei die Königszapfenanordnung (1) einen Königszapfen (10) und ein Montageelement (20) umfasst,
wobei das Montageelement (20) insbesondere ein Aufnahmeteller ist,
wobei der Königszapfen (10) eine Fußsektion (12) und einen Königszapfenkopf (14) aufweist,
wobei der Königszapfen (10) sich in eine Königszapfenrichtung (R10) erstreckt,
wobei die positive Königszapfenrichtung (R10) von der Fußsektion (12) zum Königszapfenkopf (14) weist,
wobei der Königszapfen (10) über die Fußsektion (12) form-, kraft- und/oder stoffschlüssig mittelbar und/oder unmittelbar am Montageelement (20) befestigt ist,
wobei der Königszapfen (10) derart befestigt ist, dass der Königszapfen (10) in eine Umfangsrichtung (U) um die Königszapfenrichtung (R10) rotationsfest zu dem Montageelement (20) ist,
wobei das Montageelement (20) und/oder der Königszapfen (10) eine erste Messfläche (30) aufweist(en),
welche entlang ihrer Erstreckung einen kontinuierlichen Höhenverlauf in Richtung der Königszapfenrichtung (R10) aufweist,
wobei der erste Messsensor mit der ersten Messfläche (30) messtechnisch interagiert, und
**dadurch gekennzeichnet, dass** der erste Messsensor ein induktiver Sensor ist.

2. Knickwinkelmesssystem gemäß Anspruch 1,
wobei die erste Messfläche (30) sich in einem Winkelbereich (W1) um die Königszapfenrichtung (R10) in Umfangsrichtung (U) erstreckt,
wobei der Winkelbereich (W1) bevorzugt zumindest 90°, besonders bevorzugt zumindest 150° und, insbesondere besonders bevorzugt zumindest 180°, beträgt.

3. Knickwinkelmesssystem gemäß Anspruch 2,
wobei das Verhältnis der maximale Höhendifferenz (h) der ersten Messfläche (30) zum maximalen Winkelbereich (W1) in einem Bereich von 0,025 mm / ° bis 0,5 mm / °, besonders bevorzugt in einem Bereich von 0,1 mm / ° bis 0,3 mm/° und besonders stark bevorzugt in einem Bereich von 0,15 mm / ° bis 0,25 mm / ° liegt.

4. Knickwinkelmesssystem gemäß einem der vorhergehenden Ansprüche,
wobei die erste Messfläche (30) sich in Umfangsrichtung (U) erstreckt.

5. Knickwinkelmesssystem gemäß einem der vorhergehenden Ansprüche, wobei die erste Messfläche (30) eine Stirnfläche eines Messvorsprungs (32) ausbildet.

6. Knickwinkelmesssystem gemäß Anspruch 5,
wobei der Messvorsprung (32) einstückig mit dem Königszapfen (10) ausgebildet ist, oder
wobei der Messvorsprung (32) einstückig mit dem Montageelement (20) ausgebildet ist.

7. Knickwinkelmesssystem gemäß einem der Ansprüche 5 oder 6,
wobei der Messvorsprung (32) sich von einer Grundfläche (22) aus erstreckt,
wobei die Grundfläche (22) eine Normale aufweist, die zumindest im Wesentlichen parallel zur Königszapfenrichtung (R10) ist.

8. Knickwinkelmesssystem gemäß einem der vorhergehenden Ansprüche,
wobei das Verhältnis der maximalen Höhendifferenz (h) der ersten Messfläche (30) zum minimalen Durchmesser des Königszapfens (10) in einem Bereich von 0,03 bis 0,3, besonders bevorzugt in einem Bereich von 0,06 bis 0,25 und besonders stark bevorzugt in einem Bereich von 0,09 bis 0,22 liegt.

9. Knickwinkelmesssystem gemäß einem der vorhergehenden Ansprüche,
wobei das Montageelement (20) und/oder der Königszapfen (10) eine zweite Messfläche (40) aufweist(en),
welche vorteilhafterweise entlang ihrer Erstreckung einen kontinuierlichen Höhenverlauf in Richtung der Königszapfenrichtung (R10) aufweist und/oder
wobei die zweite Messfläche (40) dieselben Merkmale aufwiesen kann wie die erste Messfläche (30).

10. Knickwinkelmesssystem gemäß Anspruch 9,
wobei die erste Messfläche (30) und die zweite Messfläche (40) jeweils eine Stirnfläche des Messvorsprungs (32) ausbildet.

11. Knickwinkelmesssystem gemäß Anspruch 10,
wobei die erste Messfläche (30) und die zweite Messfläche (40) direkt benachbart zueinander ausgebildet sind.

12. Knickwinkelmesssystem gemäß Anspruch 9,
wobei die zweite Messfläche (40) eine Stirnfläche eines zweiten Messvorsprungs (32) ausbildet.

13. Knickwinkelmesssystem gemäß einem der Ansprüche 9 bis 12,
wobei die erste Messfläche (30) entgegengesetzt ansteigend im Vergleich zur zweiten Messfläche (40) ist.

14. Knickwinkelmesssystem gemäß einer der vorhergehenden Ansprüche,
wobei eine die erste Messfläche (30) in eine Radialrichtung (R) einen weiteren Abstand von der Königszapfenrichtung (R10) aufweist als die zweite Messfläche (40).

## Claims

1. Buckling angle measuring system comprising a king pin arrangement (1), a first measuring sensor and an evaluation unit,
wherein the king pin arrangement (1) comprises a king pin (10) and a mounting element (20),
wherein the mounting element (20) is in particular a receiving plate,
wherein the king pin (10) has a foot section (12) and a king pin head (14),
wherein the king pin (10) extends in a king pin direction (R10),
wherein the positive king pin direction (R10) faces from the foot section (12) to the king pin head (14),
wherein the king pin (10) is fastened indirectly and/or directly to the mounting element (20) in a form-fitting, force-fitting and/or material-fitting manner via the foot section (12),
wherein the king pin (10) is fastened in such a way that the king pin (10) is rotationally fixed to the mounting element (20) in a circumferential direction (U) about the king pin direction (R10),
wherein the mounting element (20) and/or the king pin (10) has (have) a first measuring surface (30)
which has a continuous height profile along its extension in the direction of the king pin direction (R10),
wherein the first measuring sensor interacts metrologically with the first measuring surface (30), and
**characterised in that** the first measuring sensor is an inductive sensor.

2. Buckling angle measuring system according to claim 1,
wherein the first measuring surface (30) extends in an angular range (W1) about the kingpin direction (R10) in the circumferential direction (U),
wherein the angular range (W1) is preferably at least 90°, particularly preferably at least 150° and, in particular particularly preferably at least 180°.

3. Buckling angle measuring system according to claim 2,
wherein the ratio of the maximum height difference (h) of the first measuring surface (30) to the maximum angular range (W1) lies in a range from 0.025 mm / ° to 0.5 mm / °, particularly preferably in a range from 0.1 mm / ° to 0.3 mm / ° and especially strongly preferably in a range from 0.15 mm / ° to 0.25 mm/°.

4. Buckling angle measuring system according to any one of the preceding claims,
wherein the first measuring surface (30) extends in the circumferential direction (U).

5. Buckling angle measuring system according to any one of the preceding claims, wherein the first measuring surface (30) forms an end surface of a measuring projection (32).

6. Buckling angle measuring system according to claim 5,
wherein the measuring projection (32) is formed integrally with the king pin (10), or
wherein the measuring projection (32) is formed integrally with the mounting element (20).

7. Buckling angle measuring system according to any one of claims 5 or 6,
wherein the measuring projection (32) extends from a base surface (22),
wherein the base surface (22) has a normal which is at least substantially parallel to the kingpin direction (R10).

8. Buckling angle measuring system according to one of the preceding claims, wherein the ratio of the maximum height difference (h) of the first measuring surface (30) to the minimum diameter of the king pin (10) is in a range from 0.03 to 0.3, more preferably in a range from 0.06 to 0.25 and most preferably in a range from 0.09 to 0.22.

9. Buckling angle measuring system according to one of the preceding claims,
wherein the mounting element (20) and/or the king pin (10) has (have) a second measuring surface (40)
which advantageously has a continuous height profile along its extension in the direction of the king pin direction (R10) and/or
wherein the second measuring surface (40) can have the same features as the first measuring surface (30).

10. Buckling angle measuring system according to claim 9,
wherein the first measuring surface (30) and the second measuring surface (40) each form an end face of the measuring projection (32).

11. Buckling angle measuring system according to claim 10,
wherein the first measuring surface (30) and the second measuring surface (40) are formed directly adjacent to each other.

12. Buckling angle measuring system according to claim 9,
wherein the second measuring surface (40) forms an end face of a second measuring projection (32).

13. Buckling angle measuring system according to any one of claims 9 to 12,
wherein the first measuring surface (30) is oppositely rising compared to the second measuring surface (40).

14. Buckling angle measuring system according to one of the preceding claims, wherein the first measuring surface (30) has a greater distance from the king pin direction (R10) in a radial direction (R) than the second measuring surface (40).

## Revendications

1. Système de mesure de l'angle d'articulation, comprenant un ensemble de pivot central (1), un premier capteur de mesure et une unité d'évaluation, dans lequel
l'ensemble de pivot central (1) comprend un pivot central (10) et un élément de montage (20),
l'élément de montage (20) est en particulier un plateau de réception,
le pivot central (10) présente une section de pied (12) et une tête de pivot central (14),
le pivot central (10) s'étend dans une direction de pivot central (R10),
la direction positive de pivot central (R10) est orientée de la section de pied (12) vers la tête de pivot central (14),
le pivot central (10) est fixé directement et/ou indirectement à l'élément de montage (20) par coopération de forme, de force et/ou de matière, par l'intermédiaire de la section de pied (12),
le pivot central (10) est fixé de telle sorte que le pivot central (10) est solidaire en rotation de l'élément de montage (20) dans une direction circonférentielle (U) autour de la direction de pivot central (R10),
l'élément de montage (20) et/ou le pivot central (10) présente(nt) une première surface de mesure (30) qui, le long de son extension, présente un tracé en hauteur continu dans la direction de pivot central (R10),
le premier capteur de mesure interagit avec la première surface de mesure (30), en termes de mesure,
**caractérisé en ce que**
le premier capteur de mesure est un capteur inductif.

2. Système de mesure de l'angle d'articulation selon la revendication 1,
dans lequel la première surface de mesure (30) s'étend dans une plage angulaire (W1) autour de la direction de pivot central (R10) dans la direction circonférentielle (U),
la plage angulaire (W1) étant de préférence d'au moins 90°, de manière particulièrement préférée d'au moins 150° et, en particulier, de manière particulièrement préférée d'au moins 180°.

3. Système de mesure de l'angle d'articulation selon la revendication 2,
dans lequel le rapport de la différence maximale en hauteur (h) de la première surface de mesure (30) sur la plage angulaire maximale (W1) se situe dans une plage de 0,025 mm / ° à 0,5 mm / °, de préférence dans une plage de 0,1 mm / ° à 0,3 mm /° et de manière particulièrement préférée dans une plage de 0,15 mm / ° à 0,25 mm / °.

4. Système de mesure de l'angle d'articulation selon l'une des revendications précédentes,
dans lequel la première surface de mesure (30) s'étend dans la direction circonférentielle (U).

5. Système de mesure de l'angle d'articulation (1),
dans lequel la première surface de mesure (30) constitue une surface frontale d'une saillie de mesure (32).

6. Système de mesure de l'angle d'articulation selon la revendication 5,
dans lequel la saillie de mesure (32) est réalisée d'un seul tenant avec le pivot central (10), ou
la saillie de mesure (32) est réalisée d'un seul tenant avec l'élément de montage (20).

7. Système de mesure de l'angle d'articulation selon l'une des revendications 5 ou 6,
dans lequel la saillie de mesure (32) s'étend à partir d'une surface de base (22), la surface de base (22) ayant une normale qui est au moins sensiblement parallèle à la direction de pivot central (R10).

8. Système de mesure de l'angle d'articulation selon l'une des revendications précédentes,
dans lequel le rapport de la différence maximale en hauteur (h) de la première surface de mesure (30) sur le diamètre minimal du pivot central (10) se situe dans une plage de 0,03 à 0,3, de préférence dans une plage de 0,06 à 0,25, et de manière particulièrement préférée dans une plage de 0,09 à 0,22.

9. Système de mesure de l'angle d'articulation selon l'une des revendications précédentes,
dans lequel l'élément de montage (20) et/ou le pivot central (10) présente(nt) une deuxième surface de mesure (40) qui, le long de son extension, présente avantageusement un tracé en hauteur continu dans la direction de pivot central (R10), et/ou
la deuxième surface de mesure (40) peut présenter les mêmes caractéristiques que la première surface de mesure (30).

10. Système de mesure de l'angle d'articulation selon la revendication 9,
dans lequel la première surface de mesure (30) et la deuxième surface de mesure (40) constituent chacune une surface frontale de la saillie de mesure (32).

11. Système de mesure de l'angle d'articulation selon la revendication 10,
dans lequel la première surface de mesure (30) et la deuxième surface de mesure (40) sont réalisées de manière à être directement adjacentes l'une à l'autre.

12. Système de mesure de l'angle d'articulation selon la revendication 9,
dans lequel la deuxième surface de mesure (40) constitue une surface frontale d'une deuxième saillie de mesure (32).

13. Système de mesure de l'angle d'articulation selon l'une des revendications 9 à 12,
dans lequel la première surface de mesure (30) monte en sens inverse par rapport à la deuxième surface de mesure (40).

14. Système de mesure de l'angle d'articulation selon l'une des revendications précédentes,
dans lequel, dans une direction radiale (R), la première surface de mesure (30) est plus éloignée de la direction de pivot central (R10) que la deuxième surface de mesure (40).
